(19) Europäisches Patentamt
European Patent Office
Office européen des brevets

(11) **EP 1 742 435 A2**

(12) **DEMANDE DE BREVET EUROPEEN**

(43) Date de publication:
**10.01.2007 Bulletin 2007/02**

(51) Int Cl.:
***H04L 27/22*** *(2006.01)*

(21) Numéro de dépôt: **06116632.8**

(22) Date de dépôt: **05.07.2006**

(84) Etats contractants désignés:
**AT BE BG CH CY CZ DE DK EE ES FI FR GB GR HU IE IS IT LI LT LU LV MC NL PL PT RO SE SI SK TR**
Etats d'extension désignés:
**AL BA HR MK YU**

(30) Priorité: **05.07.2005 FR 0552038**

(71) Demandeur: **ST MICROELECTRONICS S.A.**
**92120 Montrouge (FR)**

(72) Inventeur: **MEYER, Jacques**
**38950, SAINT MARTIN LE VINOUX (FR)**

(74) Mandataire: **de Beaumont, Michel**
**Cabinet Beaumont**
**1, rue Champollion**
**38000 Grenoble (FR)**

(54) **Estimation de l'amplitude d'un signal binaire bruité**

(57) L'invention concerne un procédé et un dispositif pour estimer une première valeur (+a) d'un signal formé d'une suite de valeurs correspondant soit à ladite première valeur (+a) soit à une deuxième valeur (-a) égale à l'opposé de la première valeur, le signal pouvant prendre d'autres valeurs que lesdites première et deuxième valeurs par suite de bruit.

Fig 3A

**Description**

Domaine de l'invention

La présente invention concerne le domaine des transmissions, notamment les transmissions de symboles binaires.

Exposé de l'art antérieur

Des symboles ou données présentant deux valeurs possibles, par exemple +1 et -1, sont transmis. Après transmission, par suite du bruit, les valeurs des symboles reçus se répartissent autour de deux valeurs, que l'on notera +a et -a.

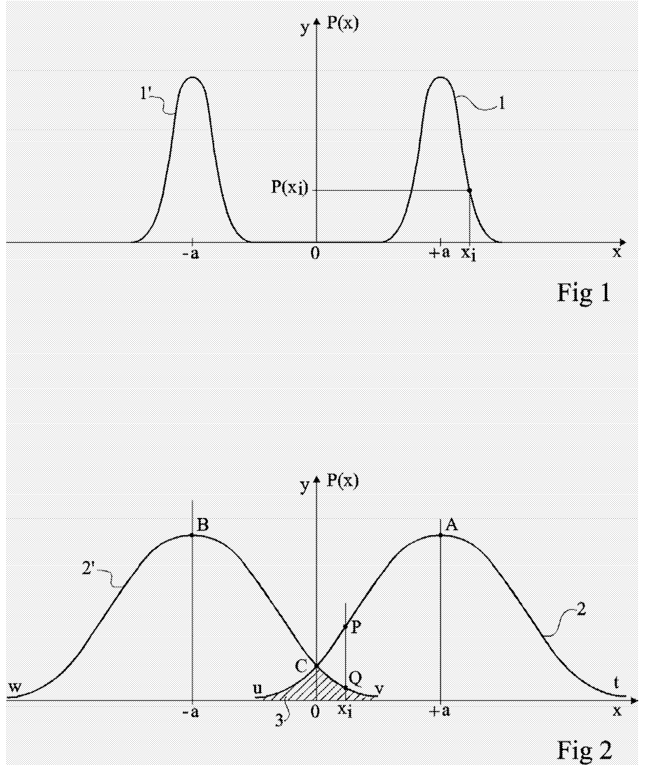

La figure 1 représente un exemple de distribution des valeurs reçues. Sur l'axe des abscisses Ox est portée la valeur $x_i$ du symbole reçu. La probabilité $P(x_i)$ de recevoir la valeur $x_i$ est portée sur l'axe des ordonnées Oy. Les valeurs reçues s'organisent selon une courbe 1 centrée sur la valeur positive +a et une courbe 1' centrée autour de la valeur négative -a.

La démodulation des symboles exigeant en général la connaissance précise des grandeurs +a et -a, il va être nécessaire d'estimer la valeur de a de la façon la plus précise possible.

Un premier procédé classique pour déterminer la valeur de a consiste à mesurer la valeur efficace du signal sur plusieurs symboles $x_i$ successifs. La formule fournissant la valeur estimée de a, $a_{est}$, est alors :

$$a_{est} = \sqrt{\frac{1}{N}\sum_i x_i^2} = \sqrt{\frac{1}{N}\sum_i (a+n_i)^2} \approx \sqrt{\frac{1}{N}\left(\sum_i a^2 + \sum_i n_i^2\right)} \quad (1)$$

dans laquelle ni représente le bruit affectant la valeur xi et N le nombre de symboles.

Lorsque le bruit est faible, la formule (1) fournit une valeur $a_{est}$ égale à ou très proche de +a à condition que, comme cela est le cas généralement, la valeur moyenne du bruit soit nulle et la suite des valeurs xi soit non corrélée au bruit.

Un autre procédé classique pour déterminer la valeur de +a est de faire la moyenne de la valeur absolue des valeurs reçues, ce qui conduit à la formule

$$a_{est} = <|x_i|> = <|a + n_i|> \qquad\qquad (2)$$

Cette estimation fournit également la valeur de +a de façon relativement précise si le bruit n'est pas trop important.

Un problème se pose cependant pour les environnements fortement bruités, par exemple lorsque le bruit n est supérieur à la valeur de a, comme en figure 2.

En figure 2, la courbe 2 représente la distribution des valeurs xi reçues correspondant à l'envoi d'un symbole positif. La courbe 2 présente un maximum A pour la valeur x=+a et présente deux portions At et Au de part et d'autre du point A. En figure 2, le bruit est plus important qu'en figure 1 et la courbe 2 coupe l'axe des ordonnées Oy en un point C. La partie Cu de la courbe 2 correspond à des valeurs reçues négatives, alors qu'elles correspondent à des symboles envoyés positifs. Pour la partie Cu de la courbe 2, les valeurs reçues sont affectées d'un bruit supérieur à a.

La courbe 2' représente la distribution des valeurs xi reçues correspondant à l'envoi d'un symbole négatif. La courbe 2' présente un maximum B pour la valeur x=-a et deux portions Bv et Bw de part et d'autre du point B. La courbe 2' coupe l'axe des ordonnées Oy au point C.

Pour une zone 3 limitée par l'axe des abscisses et les parties de courbe Cu et Cv, toute valeur $x_i$ reçue peut correspondre soit à un symbole envoyé positif (point P), soit à un symbole envoyé négatif (point Q). Ce sont ces valeurs qui sont cause d'erreurs dans les estimations classiques décrites ci-dessus, l'erreur étant d'autant plus importante que le bruit est grand.

A partir d'un certain rapport signal/bruit, les résultats fournis par les procédés précédents deviennent inexploitables.

Un objet de la présente invention est de prévoir un procédé et/ou un dispositif pour estimer la valeur de a qui est plus précis que les procédés de l'art antérieur.

Un autre objet de la présente invention est de prévoir un procédé et/ou un dispositif pour estimer la valeur de a qui est utilisable lorsque le rapport signal/bruit est faible.

Résumé de l'invention

Pour atteindre ces objets, ainsi que d'autres, la présente invention prévoit un procédé pour estimer une première valeur d'un signal formé d'une suite de valeurs correspondant soit à ladite première valeur soit à une deuxième valeur égale à l'opposé de la première valeur, le signal pouvant prendre d'autres valeurs que lesdites première et deuxième valeurs par suite de bruit, comprenant les étapes suivantes :

a) déterminer une grandeur particulière telle que le quart des valeurs d'un nombre déterminé de valeurs du signal soient supérieures ou supérieures ou égales à ladite grandeur particulière, les autres valeurs du nombre déterminé de valeurs du signal étant inférieures ou inférieures ou égales à la grandeur particulière, et
b) choisir pour première valeur la valeur de ladite grandeur particulière.

Selon un mode de réalisation de la présente invention, ledit nombre déterminé est égal à l'ensemble des valeurs reçues du signal.
Selon un mode de réalisation de la présente invention, la grandeur particulière de l'étape a) n'est pas telle que le quart des valeurs d'un nombre déterminé de valeurs du signal soient supérieures ou supérieures ou égales à ladite grandeur particulière mais telle que la moitié des valeurs absolues des valeurs du signal soient supérieures ou supérieures ou égales à ladite grandeur particulière, les autres valeurs du nombre déterminé de valeurs du signal étant inférieures ou inférieures ou égales à la grandeur particulière.
Selon un mode de réalisation de la présente invention, le procédé comprend une étape préliminaire consistant à :

x1) déterminer la moyenne d'un nombre X de valeurs consécutives du signal ; et
x2) effectuer pour chaque valeur dudit nombre X de valeurs la différence entre cette valeur et la moyenne, les étapes a) et b) étant appliquées aux différences ainsi calculées.

Selon un mode de réalisation de la présente invention, les valeurs +a et -a correspondent à des phases.
La présente invention prévoit aussi un procédé de démodulation d'un signal modulé à l'aide d'une modulation 8 PSK hiérarchique comprenant une étape utilisant un procédé tel que défini ci-dessus.
La présente invention prévoit aussi un dispositif pour estimer une première valeur d'un signal formé d'une suite de valeurs correspondant soit à ladite première valeur soit à une deuxième valeur égale à l'opposé de la première valeur, le signal pouvant prendre d'autres valeurs que lesdites première et deuxième valeurs par suite de bruit, comprenant :

- un comparateur propre à recevoir une valeur d'entrée et une autre valeur et à fournir un résultat de comparaison,
- un multiplexeur propre à recevoir ledit résultat de comparaison et à fournir une de deux valeurs déterminées,
- un additionneur propre à additionner ladite autre valeur à la valeur fournie par le multiplexeur et à fournir un résultat, et
- une mémoire propre à mémoriser le résultat fourni par l'additionneur, ladite autre valeur correspondant au contenu de la mémoire et à l'estimation de la première valeur.

Selon un mode de réalisation de la présente invention, les deux valeurs déterminées fournies par le multiplexeur sont l'une égale à $+3\varepsilon$, et l'autre égale à $-\varepsilon$, $\varepsilon$ étant un paramètre.
Selon un mode de réalisation de la présente invention, le paramètre $\varepsilon$ a une valeur plus importante au début qu'en cours du fonctionnement du dispositif.

Brève description des dessins

Ces objets, caractéristiques et avantages, ainsi que d'autres de la présente invention seront exposés en détail dans la description suivante de modes de réalisation particuliers faite à titre non-limitatif en relation avec les figures jointes parmi lesquelles :

les figures 1 et 2, précédemment décrites, sont des diagrammes représentant la distribution d'un signal reçu ;
les figures 3A, 3B, 4A et 4B sont des diagrammes représentant la distribution d'un signal reçu dans le but d'illustrer la présente invention ;
la figure 5 est un tableau comparatif des erreurs fournies par les procédés classiques et les procédés selon la présente invention ;
la figure 6 représente un circuit selon la présente invention ; et

la figure 7 représente un diagramme de modulation auquel peut être appliquée la présente invention.

<u>Description détaillée</u>

Par souci de clarté, de mêmes éléments ont été en général désignés par de mêmes références aux différentes figures et, de plus, les diverses figures ne sont pas tracées à l'échelle.

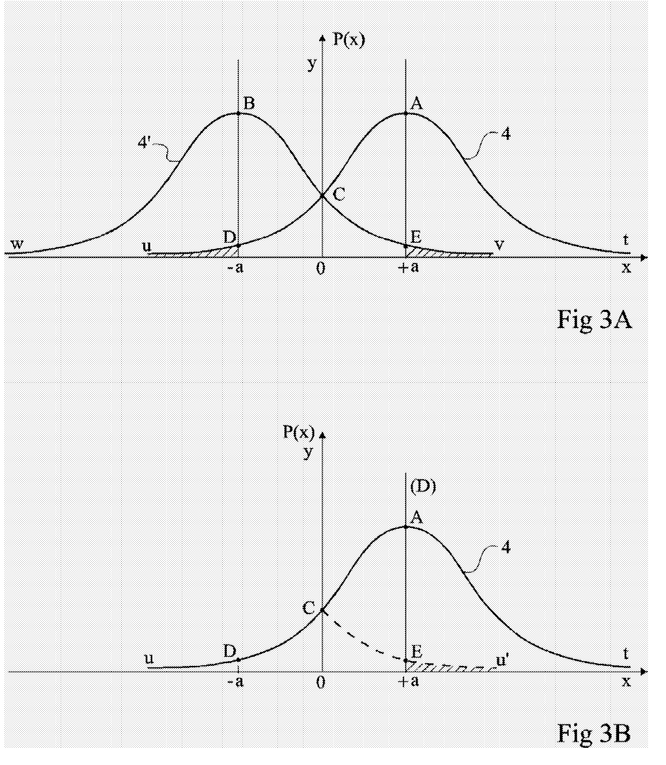

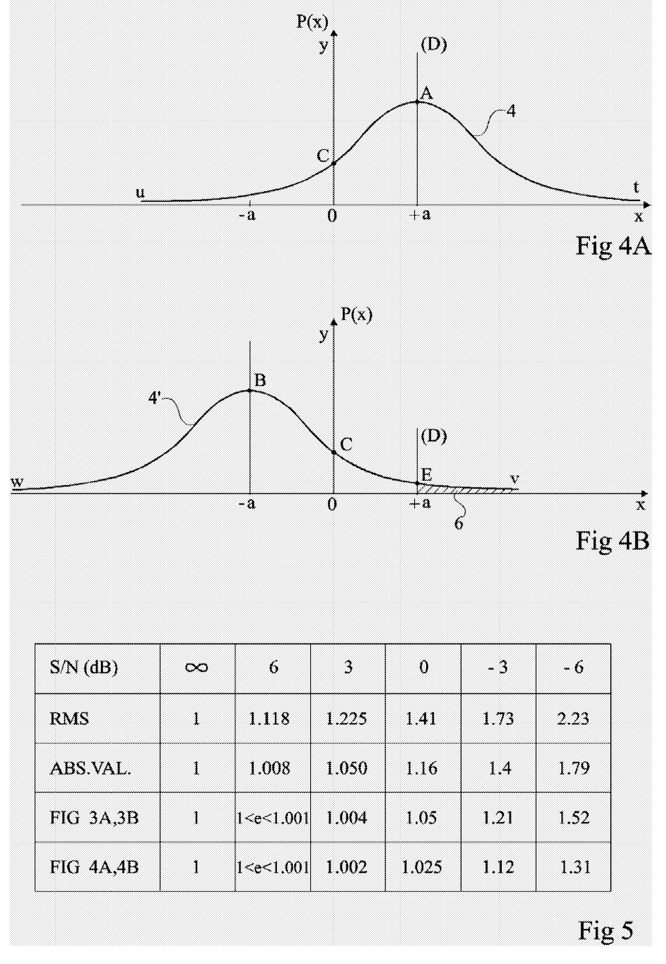

La figure 3A représente la distribution des valeurs d'un signal reçu entaché d'un bruit important. Typiquement, le bruit ni peut être supérieur à 2a, a étant la valeur absolue des symboles reçus en l'absence de bruit. Une courbe 4 représente la probabilité de recevoir une valeur xi correspondant à un symbole positif et une courbe 4' correspond à la probabilité de recevoir une valeur $x_i$ correspondant à un symbole négatif. Les distributions étant symétriques, les courbes 4 et 4' rencontrent chacune l'axe des ordonnées au point C. En outre, la courbe 4 rencontre une droite parallèle à l'axe des ordonnées et d'abscisse -a au point D. La courbe 4' rencontre une droite parallèle à l'axe des ordonnées et d'abscisse +a au point E. Les points D et E sont symétriques par rapport à l'axe des ordonnées. Pour la partie Du de la courbe 4 et la partie Ev de la courbe 4', le bruit $n_i$ est supérieur à 2a.

Le diagramme de la figure 3A représente ainsi un environnement extrêmement bruité, dans lequel les procédés classiques d'estimation de a sont inopérants.

On va maintenant expliquer le procédé selon la présente invention, et en quoi il permet une détermination plus précise de la valeur a que dans l'art antérieur.

La figure 3B reproduit la courbe 4 de la figure 3A. Supposons que l'on représente les valeurs absolues des valeurs $x_i$ reçues correspondant à des symboles émis positifs. Ces valeurs absolues se répartissent sur une courbe CAt correspondant aux abscisses positives des points de la courbe 4 et une courbe Cu', représentée en tirets sur la figure 3B, symétrique de la courbe Cu par rapport à l'axe des ordonnées Oy. Comme les distributions 4 et 4' sont symétriques, la courbe Cu' passe par le point E et correspond à la courbe Cv.

On notera que si l'on prend les valeurs absolues des symboles correspondant à la courbe 4', on obtient aussi une courbe formée des parties CAt et Cu', les courbes 4 et 4' étant symétriques par rapport à l'axe des ordonnées.

Selon une première mise en oeuvre de la présente invention, on détermine la médiane des valeurs absolues de la population reçue, c'est-à-dire que l'on détermine la grandeur statistique S telle qu'il y ait autant de valeurs absolues qui soient supérieures à S et inférieures à S.

Selon la première mise en oeuvre de la présente invention, on prend la médiane ainsi calculée pour estimer la valeur de a. La médiane des valeurs absolues fournit en effet une valeur approchée de a plus précise que dans l'art antérieur. Les raisons en sont les suivantes. Si le bruit était inférieur à 2a, la courbe Cu' serait entièrement comprise entre l'axe des ordonnées et la droite D d'équation x=+a. Dans ce cas, en ce qui concerne la courbe 4, toutes les valeurs absolues à droite de la droite D correspondraient à des valeurs supérieures à a et toutes les valeurs absolues à gauche de la droite D à des valeurs inférieures à a. Il en irait de même pour la courbe 4', toutes les valeurs absolues à droite de la droite D correspondant à des valeurs inférieures à -a. Toujours concernant la courbe 4', les valeurs absolues à gauche de la droite D correspondraient à des valeurs supérieures à -a (et inférieures en valeur absolue à a). Par conséquent, la droite D séparerait exactement la population des valeurs absolues des valeurs reçues en deux parties égales pour les bruits inférieurs à a.

Lorsque le bruit est supérieur à 2a, comme en figures 3A et 3B, les valeurs absolues correspondant à la courbe Eu' vont être comptabilisées comme des valeurs supérieures à a alors qu'elles sont inférieures à a. Ainsi, pour la courbe 4, les valeurs qui vont être cause d'erreur sont les valeurs correspondant à la courbe Eu'. Au total (courbes 4 et 4'), les valeurs cause d'erreur sont celles qui correspondent aux parties de courbe Du et Ev de la figure 3A. Pour une meilleure appréciation des valeurs cause d'erreur, les zones situées entre les courbes Du, Ev, Eu' et l'axe des abscisses ont été hachurées en figures 3A et 3B.

Si l'on compare le premier mode de mise en oeuvre de la présente invention et l'art antérieur décrit en relation avec la figure 2, on note que, selon ce premier mode de mise en oeuvre de la présente invention, les valeurs cause d'erreurs sont en nombre nettement moins important que dans l'art antérieur. En effet, dans l'art antérieur, ce sont toutes les valeurs correspondant aux courbes Cu et Cv qui sont cause d'erreur (zone 3), alors que, dans l'invention telle que décrite jusqu'à présent, seules les valeurs correspondant aux courbes Du et Ev sont source d'erreur. Les parties de courbe CD et CE, sources d'erreur dans l'art antérieur, participent désormais à une détermination exacte de a.

Cependant, pour un rapport signal sur bruit très faible, il peut être souhaitable ou nécessaire d'estimer la valeur a de façon plus précise encore, et cela peut être obtenu à l'aide d'un second mode de mise en oeuvre de la présente invention, décrit ci-après en relation avec les figures 4A et 4B.

La figure 4A reprend la courbe 4 des figures 3A et 3B, et la figure 4B reprend la courbe 4' de la figure 3A.

Selon le second mode de mise en oeuvre de la présente invention, on ne prend plus la médiane des valeurs absolues des valeurs reçues, mais on détermine une grandeur statistique T telle que le quart des valeurs reçues soient supérieures à la grandeur T et les trois quarts des valeurs reçues soient inférieures à la grandeur T. On prend ensuite la grandeur T comme valeur estimée de a. Le second mode de mise en oeuvre de la présente invention fournit une estimation plus précise de la valeur de a. Les raisons en sont les suivantes.

Considérons la figure 4A. La droite D, dont on rappelle que l'équation est x=a, partage la courbe 4 en deux parties symétriques At et Au. Il y a autant de valeurs reçues supérieures à a (courbe At) que de valeurs reçues inférieures à a (courbe Au). Considérons maintenant la relation entre la droite D et la courbe 4' (figure 4B). Toutes les valeurs de la courbe 4' sont à gauche de la droite D, à l'exception des valeurs correspondant à la courbe Ev. Si le bruit était inférieur à 2a, la courbe Bv se trouverait entièrement à gauche de la droite D et la droite D séparerait la population reçue en deux parties correspondant exactement à la grandeur T : un quart de la population supérieure à T (moitié supérieure de la courbe 4) et trois quarts de la population inférieure à T (courbe 4' et moitié inférieure de la courbe 4).

Par conséquent, pour un bruit supérieur à 2a, les valeurs reçues qui sont des sources d'erreur dans le procédé décrit ci-dessus sont les valeurs correspondant à la courbe Ev. Pour une meilleure lisibilité des valeurs source d'erreur, la zone située entre la courbe Ev et l'axe des abscisses, numérotée 6, est hachurée en figure 4B.

Ainsi, dans le second mode de mise en oeuvre de la présente invention, les valeurs provoquant une erreur sont diminuées de moitié par rapport au premier mode de mise en oeuvre de la présente invention. Ce second mode permettra donc d'estimer la grandeur a avec une précision suffisante dans un environnement plus bruité que dans le premier mode de mise en oeuvre de la présente invention.

La figure 5 est un tableau dans lequel sont repris des résultats comparatifs entre les deux procédés classiques décrits et les deux modes du procédé de l'invention. En figure 5, sont portés les résultats de l'estimation de a en fonction du rapport signal/bruit S/N, exprimé en décibels. Les procédés sont notés dans l'ordre RMS (premier procédé décrit de l'art antérieur), ABS. VAL (deuxième procédé décrit de l'art antérieur), FIG 3A,3B pour le premier mode de mise en oeuvre du procédé selon la présente invention et FIG 4A,4B pour le second mode de mise en oeuvre de l'invention. Les valeurs du rapport signal sur bruit S/N vont de l'infini (pas de bruit) à -6 dB. Dans le tableau, la valeur 1 indique que l'estimation fournit une valeur exacte (erreur nulle) et une valeur quelconque de 1,xy indique qu'il y a xy % d'erreur sur l'estimation de a. On peut apprécier la pertinence de la présente invention en comparant par exemple les résultats pour un rapport signal sur bruit de +3 et -3 décibels. Pour S/N=3 dB, les procédés classiques produisent respectivement des erreurs de 22,5 % et 5 %, alors que les procédés de l'invention présentent moins de 1 % d'erreur (respectivement 0,4 % et 0,2 %). Pour S/N=-3 dB, les procédés classiques produisent respectivement des erreurs de 73 et 40 %, tandis que les procédés de l'invention en présentent respectivement 21 et 12 %.

Pour comparer les deux modes de mise en oeuvre du procédé selon l'invention, on peut se reporter à la colonne correspondant à un rapport signal/bruit de -6 dB. Dans ce cas, le mode décrit en relation avec les figures 3A, 3B permet la connaissance de a à 52 % près et celui en relation avec les figures 4A, 4B à 31 % près (cela signifie que, pour un rapport signal/bruit supérieur à -6 dB, a réel est compris entre l'estimation de a $a_{est}$ et $a_{est}$/1.52 dans le premier cas, et entre $a_{est}$ et $a_{est}$/1.31 dans le second cas). On constate que le second mode du procédé selon la présente invention fournit une estimation meilleure que le premier et permet par conséquent des démodulations d'informations binaires particulièrement bruitées.

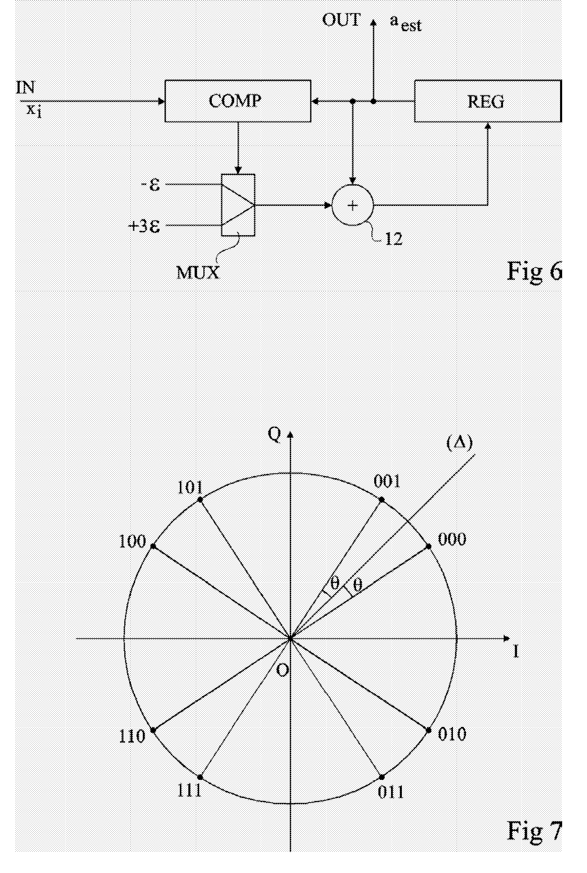

L'homme de l'art élaborera sans peine des dispositifs pour mettre en oeuvre le procédé selon la présente invention. A titre d'exemple, la figure 6 décrit un dispositif selon la présente invention permettant de mettre en oeuvre le second mode du procédé de la présente invention.

En figure 6, un dispositif pour estimer la grandeur a comporte une entrée IN destinée à recevoir les valeurs reçues $x_i$. Le dispositif comporte en outre un comparateur COMP couplé à l'entrée IN et à la sortie d'une mémoire REG, par exemple un registre. Le comparateur COMP a une sortie reliée à la borne de commande d'un multiplexeur MUX à deux entrées. Une entrée du multiplexeur MUX reçoit une valeur -ε et l'autre entrée du multiplexeur MUX reçoit une valeur +3ε. Le multiplexeur MUX comporte une sortie reliée à une entrée d'un additionneur 12. L'additionneur 12 comporte une autre entrée couplée à la sortie de la mémoire REG. L'additionneur 12 comporte une sortie attaquant la mémoire REG. La sortie de la mémoire REG, couplée comme on l'a vu au comparateur COMP et à l'additionneur 12, est en outre couplée à une sortie OUT pour fournir la valeur estimée de la grandeur a, $a_{est}$.

Le fonctionnement du dispositif de la figure 6 est le suivant. L'entrée IN reçoit les valeurs reçues xi les unes après les autres. La mémoire REG renferme initialement une valeur quelconque, par exemple 0, et par la suite la valeur $a_{est}$ qui correspond à l'estimation de la grandeur a. Le comparateur COMP compare la valeur reçue $x_i$ à la valeur stockée dans la mémoire REG. Si $x_i$ est supérieur à $a_{est}$, le multiplexeur MUX transmet la valeur +3ε à l'additionneur 12. L'additionneur 12 ajoute la valeur +3ε à $a_{est}$ et remplace le contenu de la mémoire REG par $a_{est}$ + 3ε, qui devient la nouvelle valeur de $a_{est}$. Si au contraire xi est inférieur à $a_{est}$, le multiplexeur MUX transmet la valeur -ε à l'additionneur 12. L'additionneur 12 retranche alors la valeur ε à $a_{est}$ et remplace le contenu de la mémoire REG par $a_{est}$ - ε. Une boucle est terminée et la nouvelle valeur de $a_{est}$ est disponible dans la mémoire REG pour le traitement de la valeur reçue xi suivante.

Au fur et à mesure de l'arrivée des valeurs $x_i$, la valeur $a_{est}$ stockée dans la mémoire REG finit par se stabiliser autour de la grandeur statistique T que l'on a définie en relation avec le deuxième mode de mise en oeuvre de la présente invention (grandeur statistique telle qu'un quart de la population se trouve au-dessus de la valeur statistique T et les trois quarts de la population en dessous de la valeur T).

La valeur de ε peut être fixe ou non au cours du fonctionnement du dispositif. En effet, une forte valeur de ε améliore la vitesse de stabilisation de la boucle et une faible valeur de ε permet une meilleure précision de la valeur finale. On pourra par exemple, prendre une valeur ε relativement forte au début du fonctionnement du dispositif puis la diminuer ensuite. La valeur de ε n'est pas critique. Par exemple, la valeur de ε peut être de l'ordre d'un centième ou d'un millième de la valeur finale de $a_{est}$.

Si, par hasard la valeur xi reçue est exactement égale à $a_{est}$, on peut faire par exemple que le multiplexeur laisse passer la valeur +3ε. On notera qu'on peut aussi faire que le multiplexeur laisse passer dans ce cas la valeur -ε, ou prévoir des moyens pour laisser inchangé le contenu de la mémoire REG.

On notera par ailleurs que la présente invention s'applique à tout système binaire, c'est-à-dire à tout système dans lequel les valeurs reçues correspondent à deux valeurs pouvant se ramener à la forme +a ou -a, même si elles ont une autre forme au départ. Par exemple, les valeurs reçues peuvent correspondre à 0 et à une valeur X quelconque, 1 par exemple. Pour appliquer la présente invention dans ce cas, on établira d'abord la moyenne des valeurs reçues et l'on fera la différence entre chaque valeur et la moyenne afin que les valeurs auxquelles va s'appliquer l'invention correspondent à des distributions centrées sur des valeurs -a et +a.

On notera également que, dans la présente invention, les valeurs reçues ne représentent pas nécessairement des amplitudes ou des niveaux de tension. Par exemple, les valeurs reçues peuvent correspondre à des fréquences f1 et f2, des phases φ1 et φ2, etc.

La figure 7 montre un exemple particulier d'application de la présente invention, utilisée pour discriminer des valeurs dans le cas d'une modulation de type 8 PSK hiérarchique.

En figure 7, le diagramme IQ des phases comporte quatre quadrants. Deux symboles sont présents dans chaque quadrant. Comme il s'agit d'une modulation 8 PSK hiérarchique, les symboles ne sont pas répartis de façon uniforme. Ainsi, les symboles 000 et 001 du premier quadrant sont répartis de part et d'autre de la bissectrice Δ du premier quadrant de sorte que l'angle θ qui représente l'écart de phase entre la bissectrice et chacun des deux symboles 000 et 001 est plus faible que $\frac{\pi}{4}$. Pour démoduler ce type de modulation, un décodeur classique peut d'abord déterminer à quel quadrant appartient un symbole reçu, puis un décodeur particulier est nécessaire pour déterminer, parmi les symboles correspondant à un quadrant déterminé, ceux qui correspondent à l'une ou l'autre des valeurs. Il s'agit donc à ce niveau d'un système binaire où la présente invention est applicable.

Ainsi, en figure 7, pour déterminer la valeur de θ, on prend d'abord tous les symboles correspondant à un quadrant (on se limitera pour l'exemple au premier quadrant) et on fait la différence de leur phase avec la phase de la bissectrice du quadrant, ici $\frac{\pi}{4}$ radians. L'environnement est en général extrêmement bruité et, pour déterminer θ, on peut appliquer par exemple le second procédé selon la présente invention, c'est-à-dire déterminer la grandeur statistique T telle que le quart de la population des phases ait une phase supérieure à T. La phase θ est alors prise égale à T.

Bien entendu, la présente invention est susceptible de diverses variantes et modifications qui apparaîtront à l'homme de l'art.

**Revendications**

1. Procédé pour estimer, à l'aide d'un circuit, une première valeur (+a) d'un signal formé d'une suite de valeurs correspondant soit à ladite première valeur (+a) soit à une deuxième valeur (-a) égale à l'opposé de la première valeur, le signal pouvant prendre d'autres valeurs que lesdites première et deuxième valeurs par suite de bruit, comprenant les étapes suivantes :

   a) déterminer une grandeur particulière (T) telle que le quart des valeurs d'un nombre déterminé de valeurs du signal soient supérieures ou supérieures ou égales à ladite grandeur particulière, les autres valeurs du nombre déterminé de valeurs du signal étant inférieures ou inférieures ou égales à la grandeur particulière, et
   b) choisir pour première valeur la valeur de ladite grandeur particulière.

2. Procédé selon la revendication 1, dans lequel ledit nombre déterminé est égal à l'ensemble des valeurs reçues du signal.

3. Procédé selon l'une quelconque des revendications 1 à 2, comprenant une étape préliminaire consistant à :

   x1) déterminer la moyenne dudit nombre prédéterminé de valeurs du signal ; et

x2) effectuer pour chaque valeur dudit nombre prédéterminé de valeurs la différence entre cette valeur et la moyenne, les étapes a) et b) étant appliquées aux différences ainsi calculées.

**4.** Procédé selon l'une quelconque des revendications 1 à 3, dans lequel les valeurs +a et -a correspondent à des phases.

**5.** Procédé de démodulation d'un signal modulé à l'aide d'une modulation 8 PSK hiérarchique, **caractérisé en ce qu'**il comprend une étape utilisant un procédé selon l'une quelconque des revendications 1 à 4, cette étape étant utilisée pour distinguer les deux valeurs correspondant à une même phase de la modulation 8 PSK.

**6.** Dispositif pour estimer une première valeur (+a) d'un signal formé d'une suite de valeurs correspondant soit à ladite première valeur (+a) soit à une deuxième valeur (-a) égale à l'opposé de la première valeur, le signal pouvant prendre d'autres valeurs que lesdites première et deuxième valeurs par suite de bruit, comprenant :

- un comparateur (COMP) propre à recevoir une valeur d'entrée et une autre valeur et à fournir un résultat de comparaison,
- un multiplexeur (MUX) propre à recevoir ledit résultat de comparaison et à fournir une de deux valeurs déterminées ($+3\varepsilon$, $-\varepsilon$),
- un additionneur (12) propre à additionner ladite autre valeur à la valeur fournie par le multiplexeur et à fournir un résultat, et
- une mémoire (REG) propre à mémoriser le résultat fourni par l'additionneur, ladite autre valeur correspondant au contenu de la mémoire et à l'estimation ($a_{est}$) de la première valeur,

dans lequel les deux valeurs déterminées fournies par le multiplexeur sont l'une égale à $+3\varepsilon$, et l'autre égale à $-\varepsilon$, $\varepsilon$ étant un paramètre, et dans lequel le multiplexeur fournit la valeur $+3\varepsilon$ si la valeur d'entrée est supérieure ou supérieure ou égale à ladite autre valeur.

**7.** Dispositif selon la revendication 6, dans lequel le paramètre $\varepsilon$ est variable et prend une première valeur $\varepsilon 1$ au début du fonctionnement du dispositif et une deuxième valeur $\varepsilon 2$ au cours du fonctionnement du dispositif, la première valeur $\varepsilon 1$ étant supérieure à la deuxième valeur $\varepsilon 2$.

Fig 1

Fig 2

Fig 3A

Fig 3B

Fig 4A

Fig 4B

| S/N (dB) | ∞ | 6 | 3 | 0 | - 3 | - 6 |
|----------|-----|------------|-------|-------|------|------|
| RMS | 1 | 1.118 | 1.225 | 1.41 | 1.73 | 2.23 |
| ABS.VAL. | 1 | 1.008 | 1.050 | 1.16 | 1.4 | 1.79 |
| FIG 3A,3B | 1 | 1<e<1.001 | 1.004 | 1.05 | 1.21 | 1.52 |
| FIG 4A,4B | 1 | 1<e<1.001 | 1.002 | 1.025 | 1.12 | 1.31 |

Fig 5

OUT $a_{est}$

IN
$x_i$

COMP

REG

$-\varepsilon$

$+3\varepsilon$

MUX

+

12

Fig 6

Q

(Δ)

101

001

100

000

θ θ

O

I

110

010

111

011

Fig 7